# EUROPEAN PATENT SPECIFICATION

(11) **EP 2 362 461 B1**
(45) Date of publication and mention of the grant of the patent: **17.10.2012**
(21) Application number: 10174076.9
(22) Date of filing: 26.08.2010
(51) Int. Cl.: H01M 2/04, H01M 2/12

(54) **Rechargeable battery**
Wiederaufladbare Batterie
Batterie rechargeable

(30) Priority: 25.02.2010 US 659110
(43) Date of publication of application: 31.08.2011
(73) Proprietor: SB LiMotive Co., Ltd., Yongin-si Gyeonggi-do (KR)
(72) Inventor: Byun, Sang-Won, Gyeonggi-do (KR)
(74) Representative: Gulde Hengelhaupt Ziebig & Schneider

(56) References cited:
- EP-A1- 2 104 159
- JP-A- 2003 187 760
- JP-A- 2006 351 234
- US-A1- 2005 287 422
- US-B1- 6 562 508

## Description

### Field

The described technology relates generally to a rechargeable battery. More particularly, it relates to a rechargeable battery having a vent plate that is installed in a cap plate and broken when internal pressure of a case is increased.

### Description of the Related Art

Unlike a primary battery that cannot be recharged, a rechargeable battery (also, referred to as a secondary battery) can be repeatedly charged and discharged, and is classified as a low-capacity battery and a high-capacity battery. A high-capacity secondary battery forms a battery module by connecting a plurality of unit batteries in the form of a pack, and is used as the power supply for driving motors in hybrid electric vehicles and the like.

For example, a rechargeable battery module is formed to acquire necessary power by coupling a plurality of unit batteries in series.

The unit battery includes an electrode assembly having a positive electrode, a separator, and a negative electrode, a case in which the electrode assembly is installed, and a cap plate combined to the case to seal an opening of the case and having an electrode terminal electrically connected to the electrode assembly.

The unit battery generates internal gas by repeating charging and discharging. Thus, internal pressure of the unit battery is increased, thereby causing a swelling phenomenon.

The cap plate includes a vent hole and a vent plate for prevention explosion of the unit battery due to the swelling phenomenon. The vent hole is formed in a penetration structure in the cap plate to emit the internal gas of the unit battery therethrough.

The vent plate seals the vent hole in normal operation, and is adhered to the cap plate around the vent hole to be broken when the internal pressure is increase to thereby open the vent hole.

US 6,562,508 B1 discloses a secondary battery cell with a vent plate provided within a cap plate. The vent plate comprises a diaphragm provided below the top surface of the cap plate being fixed within the cap plate by a fixing ring. EP 2 104 159 A1 discloses a secondary battery with a vent opening formed in a top surface of a cap plate. JP 2006 351234 A discloses a vent plate formed integral with a cap plate. US 2005/0287422 A1 discloses a safety valve with a reinforcement portion embedded in a cap plate.

As described, the vent plate may be formed integrated integrally to the cap plate or may be welded to the cap plate, and the cap plate may be deformed due to thermal deformation during a welding process or internal pressure of the unit battery.

According to the deformation of the cap plate, the vent plate may be deformed. Accordingly, operation pressure of the vent plate may be changed. That is, the vent plate may not be normally operated in a predetermined internal pressure level.

The above information disclosed in this Background section is only for enhancement of understanding of the background of the described technology and therefore it may contain information that does not form the prior art that is already known in this country to a person of ordinary skill in the art.

### SUMMARY

A rechargeable battery according to an exemplary embodiment of the present invention prevents deformation of a vent plate when a cap plate is deformed to thereby enable a vent plate to be normally operated under predetermined internal pressure.

A rechargeable battery according to the invention comprises an electrode assembly having a first electrode, a second electrode, and a separator interposed between the first and the second electrodes, a case for mounting the electrode assembly therein, a cap plate for closing an opening of the case, a vent hole formed in the cap plate, and a vent plate closing the vent hole. Further, a reinforcement member is formed on the cap plate and the vent plate is attached to the reinforcement member. The reinforcement member is formed on the cap plate protruding from the outer surface of the cap plate and comprises a first portion having a first wall thickness. The vent plate is welded to the reinforcement member and the reinforcement member protruding from the outer surface of the" cap plate further comprises a second portion formed on top of and protruding from the first portion having a second wall thickness different from the first wall thickness.

Advantageously, the reinforcement member blocks or at least decreases deformation of the cap plate. The vent plate maintains the vent hole the closed state in the internal pressure that is lower than the predetermined level and cut out or ruptured or breaks when the internal pressure exceeds the predetermined level to emit internal gas to thereby prevent explosion of the rechargeable battery.

The reinforcement member preferably surrounds the vent hole. Additionally or alternatively, the reinforcement member has an inner diameter equal to the diameter of the vent hole.

The reinforcement member preferably protrudes from the surface of the cap I plate around the vent hole.

The inner surface of the reinforcement member preferably has a stepped profile such that the inner circumference of the reinforcement member decreases towards the cap plate, wherein the vent plate is supported on a surface of an inner step of the reinforcement member or is supported on a top surface of the reinforcement member.

The reinforcement member preferably protrudes from the cap plate and surrounds the vent hole with a constant wall thickness, wherein the vent plate is supported on and attached to an upper surface the reinforcement member.

The outer surface of the reinforcement member may have a stepped profile such that the outer circumference of the reinforcement member increases towards the cap plate, wherein the vent plate is supported on and attached to an upper surface the reinforcement member.

The vent plate preferably comprises protrusions. The vent plate may have a larger diameter than the outer diameter of the top of the reinforcement member and the protrusions may be formed on an outer circumference of the vent plate protruding towards the cap plate and attached to the outer surface of the reinforcement member.

Advantageously, an inventive rechargeable battery with a first and a second portion provides a larger resistivity against deformation.

The first wall thickness is preferably larger than the second wall thickness and the second portion is aligned with the outer surface of the first portion and the vent plate is supported on the first portion or the second portion.

The first wall thickness may be larger than the second wall thickness, the second portion may be aligned with the inner surface of the first portion, and the vent plate may be supported on the second portion.

If the first wall thickness is larger than the second wall thickness, the resistivity against deformation can be further improved.

The first wall thickness of the reinforcement member may be larger than the thickness of the cap plate.

As a result, the resistivity of the battery against deformation can be further improved.

The vent plate is preferably adapted to maintain the vent hole in a closed state if an internal pressure inside the battery is below a predetermined level and is adapted to open the vent hole if the inner pressure inside the battery is above the predetermined level.

The vent plate has a smaller thickness than the cap plate. Additionally or alternatively, the vent plate includes a notch.

The reinforcement member may be formed of or consist of the same material as the cap plate. The reinforcement member may be formed integrally with the cap plate.

As described, the rechargeable battery according to the exemplary embodiment of the present invention includes reinforcement member protruded from a surface around a vent hole of a cap plate, and the vent plate is adhered to the reinforcement member to thereby prevent thermal deformation of the cap plate due to a welding process and deformation progress from the cap plate due to external force.

Therefore, although the cap plate is deformed, deformation of the vent plate can be prevented by the reinforcement member. The vent plate can emit gas through normal operation only under the predetermined internal pressure.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3 is an exploded perspective view of a cap plate and a vent plate.
FIG. 4 is a cross-sectional view of an adhesion state of the cap plate and the vent plate of FIG. 3.
FIG. 5 is a cross-sectional view of an adhesion state of a cap plate and a vent plate in a rechargeable battery according to a second exemplary embodiment of the present invention.
FIG. 6 is a cross-sectional view of an adhesion state of a cap plate and a vent plate in a rechargeable battery according to a third exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

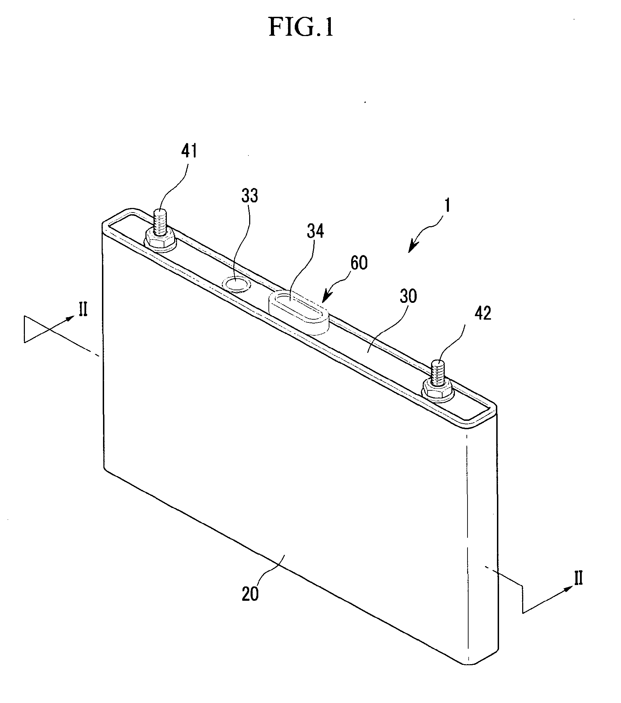

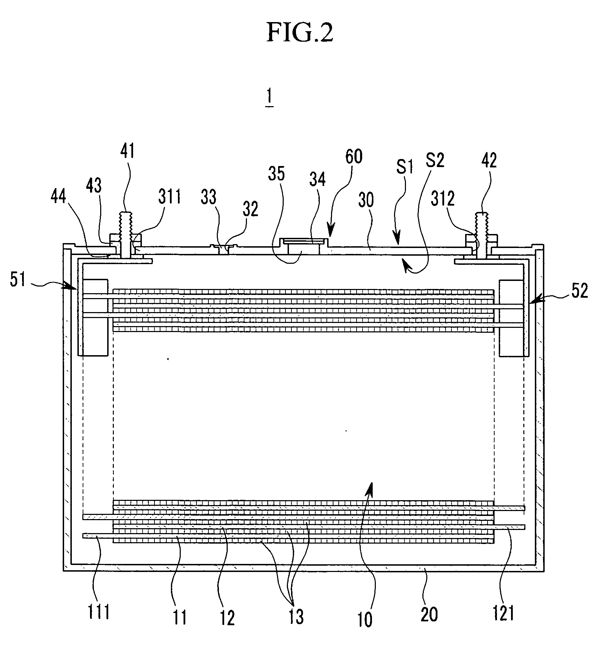

FIG. 1 is a perspective view of a rechargeable battery according to a first exemplary embodiment of the present invention, and FIG. 2 is a cross-sectional view of FIG. 1, taken along the line II-II.

Referring to FIG. 1 and FIG. 2, a rechargeable battery 1 includes a case 20 in which an electrode assembly 10 is installed, a cap plate 30 sealing and closing an opening formed in one side of the case 20, terminal electrodes 41 and 42 provided in terminal holes 311 and 312 of the cap plate 30, and lead tabs 51 and 52 connecting the electrode terminals 41 and 42 to the electrode assembly 10.

The electrode assembly 10 includes a separator 13, which is an insulator, and a positive electrode 11 and a negative electrode 12 respectively disposed both sides of the separator 13, and is formed in jelly roll shape by spirally winding the positive electrode 11, the negative electrode 12, and the separator 13.

The positive electrode 11 and the negative electrode 12 respectively include a current collector formed of a thin metal foil and an active material coated on a surface of the current collector. In addition, the positive electrode 11 and the negative electrode 12 respectively include a coated region where a current collector is coated with the active material and uncoated regions 111 and 121 where the current collector is not coated with the active material.

The coated region occupies almost the entire area of each of the positive electrode 11 and the negative electrode 12. The uncoated regions 111 and 121 in a jelly roll form are respectively disposed at both sides of the coated region of the electrode assembly 10.

For example, the electrode assembly 10 forms wide front rear areas in the jelly roll form, and end portions of the uncoated regions 111 and 121, which as left and right sides of the uncoated regions 111 and 121 are formed in a shape that substantially correspond to a cuboid having a narrow and long area.

The case 20 forms an entire exterior of the rechargeable battery 1, and may be formed of a conductive metal such as aluminum, an aluminum alloy, or nickel-plated steel. In addition, the case 20 provides a space for installing the electrode assembly 10 therein. For example, the case 20 may be formed in a prismatic hexahedron having an opening in one side thereof for receiving the electrode assembly 10 in a shape that corresponds to a hexahedron. The opening faces upward in the case 20 shown in FIG. 1 and FIG. 2.

The cap plate 30 is formed of a thin plate and combined to the opening to close and seal the case 20. As described, the cap plate 30 is formed to connect inside and outside the case 20 as necessary while blocking the inside and outside of the case 20.

The cap plate 30 forms constituent elements for forming and operation of the rechargeable battery 1, for example, forms terminal holes 311 and 312 for drawing out the electrode terminals 41 and 42, an electrolyte injection opening 32 for injection of electrolyte solution, and a vent hole 35 for guaranteeing safety of the rechargeable battery 1 when internal pressure is increased.

The terminal holes 311 and 312 penetrate the cap plate 30 so as to enable insertion of the electrode terminals 41 and 42. That is, the electrode terminals 41 and 42 respectively draw out the positive electrode 11 and the negative electrode 12 of the electrode assembly 10 through the terminal holes 311 and 312.

For example, the electrode terminals 41 and 42 are respectively installed in the terminal holes 311 and 312 by providing an outer insulator 43 and an inner insulator 44. Therefore, the outer insulator 43 and the inner insulator 44 form electrical insulation structure between the electrode terminals 41 and 42 and the cap plate 30.

The electrode terminals 41 and 42 are electrically connected to the electrode assembly from inside the case 20 through the terminal holes 311 and 312, and simultaneously protruded outside the case 20. The electrode terminals 41 and 42 are a positive electrode terminal 41 connected to the positive electrode 11 and a negative electrode terminal 42 connected to the negative electrode 12.

The terminal holes 311 and 312, the inner insulator 44, and the outer insulator 43 may be formed in the same structure in the positive electrode terminal 41 and in the negative electrode terminal 42. Therefore, the terminal holes 311 and 312, the inner insulator 44, and the outer insulator 43 formed in the positive electrode terminal 41 will be exemplarily described.

For better comprehension and ease of description, the cap plate 30 will be additionally described. That is, the cap plate 30 includes a first surface S1 that faces outside the case 20 and a second surface S2 that faces inside the case 20 in an opposite side of the first surface S1.

The outer insulator 43 is placed on the first surface S1 of the cap plate 30 and partially inserted to the terminal hole 311 to electrically insulate the positive electrode terminal 41 and the cap plate 30.

That is, the outer insulator 43 electrically insulates an external circumferential surface of the positive electrode terminal and the first surface S1 of the cap plate 30, and at the same time, electrically insulates the external circumferential surface of the positive electrode terminal 41 and an interior circumference of the terminal hole 311, facing external circumferential surface of the positive electrode terminal 41.

The inner insulator 44 contacts the second surface S2 of the cap plate 30, and electrically insulates a portion of the cap plate 30, surrounding the terminal hole 311 and the lead tab 51 that faces the portion of the cap plate 30. That is, the inner insulator 44 electrically insulates an upper surface of the lead tab 51 and the second surface S2 of the cap plate 30, and at the same time, electrically insulates the external circumferential surface of the positive electrode terminal 41 and an interior circumference of the cap plate 30, facing the external circumference surface of the positive electrode terminal 41.

One ends of the lead tabs 51 and 52 are respectively connected to the electrode terminals 41 and 42, and the other ends thereof are respectively connected to the uncoated regions 111 and 121 formed at respective ends of electrode assembly 10. That is, the lead tabs 51 and 52 are formed as a pair, and respectively connects the positive electrode 11 and the negative electrode 12 to the positive electrode terminal 41 and the negative electrode terminal 42.

The electrolyte injection opening 32 enables injection of the electrolyte solution into the case 20 in a state of being combined to the cap plate 30. After the injection of the electrolyte solution into the case 20, the electrolyte injection opening 32 is sealed by the sealing cap 33.

When the rechargeable battery 1 is in the normal operation, the vent hole 35 is maintained in the closed state, and is closed and sealed by the vent plate 34 to be opened when internal pressure is increased. That is, the vent plate 34 formed in a thinner plate than the cap plate 30 is adhered around the vent hole 35.

When the internal pressure of the case 20 is increased higher than a predetermined level due to charging and discharging of the electrode assembly 10, the vent plate 34 is cut out or ruptured or breaks by the internal pressure and emits internal gas of the rechargeable battery 1. Therefore, explosion of the rechargeable battery 1 can be prevented.

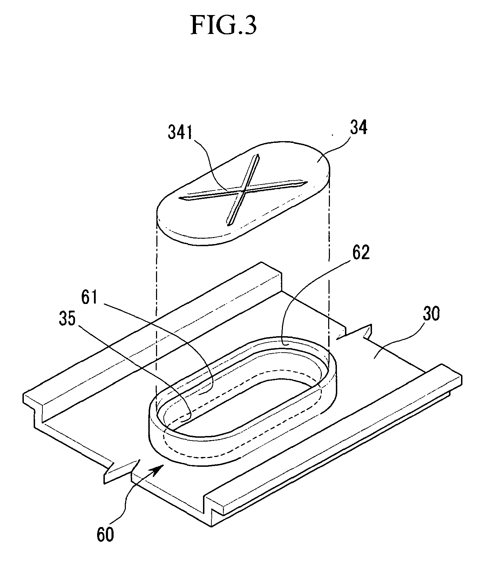

The vent plate 34 may include a notch 341 having various structures that induce a prompt cut-out or rupture of the vent plate 34 in a predetermined internal pressure level. FIG. 3 exemplarily shows a notch 341 that crosses in a center of the vent plate 34. When the internal pressure is increased, the notch 341 may be cut out from the crossed center or ruptured or breaks. The vent plate 34 may be thermally deformed when the vent plate 34 is welded to the vent hole 35 or the vent plate 34 may be deformed when the cap plate 30 is deformed due to external force in use of the rechargeable battery 1. Therefore, deformation of the vent plate 34 should be minimized.

For this purpose, the cap plate 30 according to the first exemplary embodiment may further include a reinforcement member 60 formed protruding around the vent hole 35. The reinforcement member 60 may be formed on at least one of the first and second surfaces S1 and S2 of the cap plate 30, and reinforces resistivity to deformation due to thermal deformation or external force of the cap plate 30 around the vent hole 35. That is, the reinforcement member 60 blocks or at least decreases deformation of the cap plate 30.

The vent plate 34 is adhered to, that is welded to the reinforcement member 60 while sealing the vent hole 35. Therefore, the deformation of the vent plate 34 can be minimized when the cap plate 30 is thermally deformed due to the welding. In addition, when the cap plate 30 is deformed due to the external force while being used, the reinforcement member 60 welded to the vent plate 34 decreases and blocks deformation progress of the cap plate 30. Accordingly, the deformation of the vent plate 34 can be minimized.

That is, deformation of the vent plate 34 due to other factors can be minimized, and the vent plate 34 maintains the vent hole 35 the closed state in the internal pressure that is lower than the predetermined level and cut out or ruptured or breaks when the internal pressure exceeds the predetermined level to emit internal gas to thereby prevent explosion of the rechargeable battery 1.

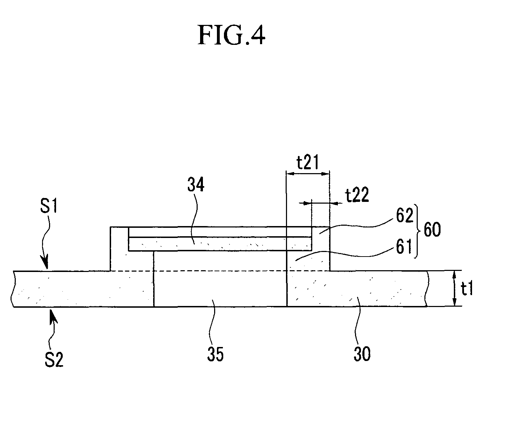

FIG. 3 is en exploded perspective view of the cap plate and the vent plate, and FIG. 4 is a cross-sectional view of an adhesion state of the cap plate and the vent plate of FIG. 3.

Referring to FIG. 3 and FIG. 4, the reinforcement member 60 includes a first end 61 extended from the vent hole 35 and formed protruding toward the first surface S1 of the cap plate 30 and a second end 62 forming a hole extended larger than the vent hole 35 in the first end 61 to fix a location where the vent plate 34 is placed.

That is, an interior circumference of the first end 61 and the vent hole 35 are equal to each other, and an interior circumference of the second 62 is greater than the vent hole 35. In addition, the interior circumference of the second end 62 enables loose insertion of the vent plate 34 corresponding to an exterior circumference of the vent plate 34.

The cap plate 30 has a first thickness t1. The thickness of the reinforcement member 60 is set to a twenty-first thickness t21 at the first end 61 and set to a twenty-second thickness t22 at the second end 62. Since exterior circumferences of the first end 61 and the second end 62 are linearly formed in a direction of the first thickness t1, the twenty-second thickness t22 of the second end 62 is formed to be less than the twenty-first thickness t21. The twenty-second thickness t22 of the second end 62 is preferably formed to have a value of 20-90% of value of the thickness of the twenty-first thickness t21, more preferably 30-80%. Here, the twenty-first and twenty-second thicknesses t21 and t22 of the first and second ends 61 and 62 are set in a direction that crosses the direction of the first thickness t1 of the cap plate 30.

Compared to a cap plate (not shown) that does not further include first and second ends 61 and 62, the cap plate 30 further including the first and second ends 61 and 62 in the first surface S1 has more strong resistivity to deformation due to thermal deformation and external force.

The first end 61 and the second end 62 increase resistivity to the thermal deformation and deformation of the cap plate 30 around the vent hole 35. The interior circumference of the second end 62 is larger than the vent hole 35, and therefore interior circumference of the second end 62 eases arrangement of the vent plate 34 and fixes movement of the vent plate 34.

A surface of the first end 61 connected to the second end 62 induces contact with the vent plate 34 placed thereon in a flat shape for tight adhesion therebetween so as to close and seal the vent hole 35.

The twenty-first thickness t21 of the first end 61 may be formed to be larger than the first thickness t1 of the cap plate 30. The twenty-first thickness t21 sets an area for the reinforcement member 60 with respect to the cap plate 30, and resistivity to the deformation of the cap plate 30 can be increased as the area is increased.

Hereinafter, another exemplary embodiment of the present inventions will be described. Parts that are the same as that of the first exemplary embodiment of the present invention will be omitted.

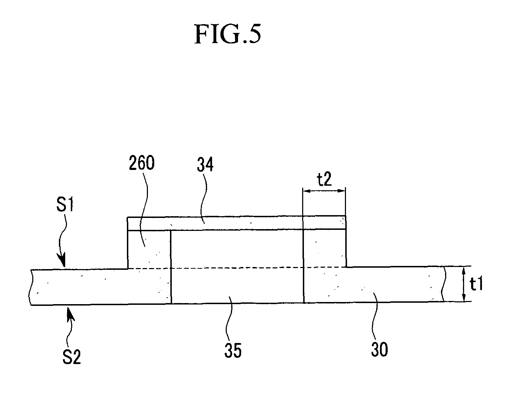

FIG. 5 is a cross-sectional view of an adhesion state of a cap plate and a vent plate in a rechargeable battery according to the second exemplary embodiment of the present invention.

Referring to FIG. 5, a reinforcement member 260 is formed protruding on a first surface S1 of a cap plate 30, and a vent plate 34 is adhered to a surface of the reinforcement member 260.

The reinforcement member 60 of the first exemplary embodiment has a stair structure having the first and second ends 61 and 62, but the reinforcement member 260 of the second exemplary embodiment has a frame structure having a uniform thickness over the entire protruded portions.

A second thickness t2 of the reinforcement member 260 may be formed to be larger than a first thickness t1 of the cap plate 30. The reinforcement member 260 having the second thickness t2 may increase resistivity to thermal deformation and deformation of the cap plate 30.

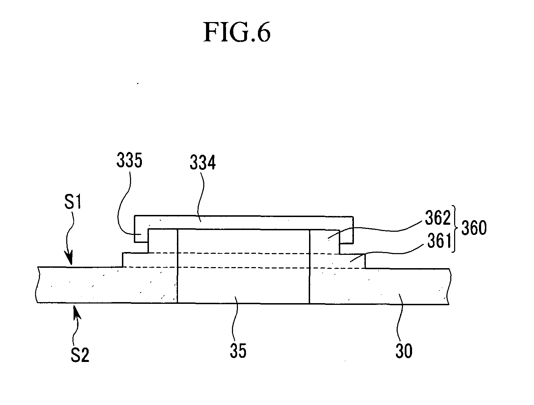

FIG. 6 shows a cross-sectional view of an adhesion state between a cap plate and a vent plate of a rechargeable battery according to a third exemplary embodiment of the present invention.

Referring to FIG. 6, a reinforcement member 360 is formed protruding on a first surface S1 of a cap plate 30, and a vent plate 334 is adhered to a surface of the reinforcement member 360.

In the reinforcement member 60 of the first exemplary embodiment, the interior circumferences of the first and second ends 61 and 62 connected to the vent hole 35 are formed in a stair structure, but in the reinforcement member 360 of the third exemplary embodiment, exterior circumferences of first and second ends 361 and 362 are formed in a stair structure.

In the third exemplary embodiment, the first end 361 is formed extended from a vent hole 35. The second end 362 is extended from the first end 361, and is smaller than the first end 361 in exterior circumference. According to the structure of the reinforcement member 360, the vent plate 334 have a protrusion 335 combined to the exterior circumference of the second end 362. In this case, the vent hole 35 and interior circumferences of the first and second ends 361 and 362 are linearly formed.

A plurality of protrusions 335 may be formed in an external circumference of the vent plate 334, and as shown in the drawing, the protrusion 335 may be formed in a frame structure over the entire exterior circumference portions. The protrusion 335 may fix a location where the vent plate 334 is placed on the second end of the reinforcement member 360.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (1) comprising:
an electrode assembly (10) having a first electrode (11), a second electrode (12), and a separator (13) interposed between the first and the second electrodes (11, 12);
a case (20) for mounting the electrode assembly (10) therein;
a cap plate (30) for closing an opening of the case (20);
a vent hole (35) formed in the cap plate (30);
a vent plate (34) closing the vent hole (35); and
a reinforcement member (60, 260, 360) is formed on the cap plate (30) protruding from the outer surface of the cap plate (30) and comprising a first portion (61, 260, 361) having a first wall thickness (t21, t2),
**characterized in that**
the vent plate (34) is welded to the reinforcement member (60, 260, 360), and
the reinforcement member (60, 360) protruding from the outer surface of the cap plate (30) further comprises a second portion (62, 362) formed on top of and protruding from the first portion (61, 361) having a second wall thickness (t22) different from the first wall thickness (t21).

2. Rechargeable battery (1) according to claim 1, wherein the reinforcement member (60, 260, 360) surrounds the vent hole (35), and/or has an inner diameter equal to the diameter of the vent hole (35).

3. Rechargeable battery (1) according to claim 1 or 2, wherein the reinforcement member (60, 260, 360) protrudes from the surface of the cap plate (30) around the vent hole (35).

4. Rechargeable battery (1) according to any of claims 1 to 3, wherein
the inner surface of the reinforcement member (60) has a stepped profile such that the inner circumference of the reinforcement member (60) decreases towards the cap plate (30), wherein the vent plate (34) is supported on a surface of an inner step of the reinforcement member (60), or
is supported on a top surface of the reinforcement member (60).

5. Rechargeable battery (1) according to any of claims 1 to 3, wherein the reinforcement member (260) protrudes from the cap plate (30) and surrounds the vent hole (35) with a constant wall thickness (t2), wherein the vent plate (34) is supported on and attached to an upper surface the reinforcement member (260).

6. Rechargeable battery (1) according to any of claims 1 to 3, wherein the outer surface of the reinforcement member (360) has a stepped profile such that the outer circumference of the reinforcement member (360) increases towards the cap plate (30), wherein the vent plate (334) is supported on and attached to an upper surface the reinforcement member (360).

7. Rechargeable battery (1) according to claim 6, wherein the vent plate (334) comprises protrusions (335).

8. Rechargeable battery (1) according to claim 7, wherein vent plate (334) has a larger diameter than the outer diameter of the top of the reinforcement member (360) and the protrusions (335) are formed on an outer circumference of the vent plate (334) protruding towards the cap plate (30) and attached to the outer surface of the reinforcement member (360).

9. Rechargeable battery (1) according to claim 1, wherein the first wall thickness (t21) is larger than the second wall thickness (t22) and the second portion (62) is aligned with the outer surface of the first portion (61) and the vent plate (34) is supported on the first portion (61) or the second portion (62).

10. Rechargeable battery (1) according to claim 1, wherein the first wall thickness (t21) is larger than the second wall thickness (t22), the second portion (362) is aligned with the inner surface of the first portion (361), and the vent plate (334) is supported on the second portion (362).

11. Rechargeable battery (1) according to any of claims 1 or 9 to 10, wherein the first wall thickness (t21, t2) of the reinforcement member (60, 360) is larger than the thickness (t1) of the cap plate (30).

12. Rechargeable battery (1) according to any of the previous claims, wherein the vent plate (34) is adapted to maintain the vent hole (35) in a closed state if an internal pressure inside the battery (1) is below a predetermined level and is adapted to open the vent hole (35) if the inner pressure inside the battery (1) is above the predetermined level.

13. Rechargeable battery (1) according to any of the previous claims, wherein the vent plate (34):
has a smaller thickness than the cap plate (30); and/or
includes a notch (341).

## Patentansprüche

1. Wiederaufladbare Batterie (1), umfassend:
eine Elektrodenbaugruppe (10) mit einer ersten Elektrode (11), einer zweiten Elektrode (12) und einem zwischen der ersten und der zweiten Elektrode (11, 12) angeordneten Trennelement (13);
ein Gehäuse zur Anbringung der Elektrodenbaugruppe (10) darin;
eine Deckelplatte (30) zum Verschließen einer Öffnung des Gehäuses (20);
eine in der Deckelplatte (30) ausgebildete Lüftungsöffnung (35);
eine die Lüftungsöffnung (35) verschließende Verschlussplatte (34); und
wobei auf der Deckelplatte (30) ein Verstärkungselement (60, 260, 360) ausgebildet ist, das von der Außenfläche der Deckelplatte (30) vorsteht und einen ersten Abschnitt (61, 260, 361) mit einer ersten Wanddicke (t21, t2) umfasst,
**dadurch gekennzeichnet, dass**
die Verschlussplatte (34) mit dem Verstärkungselement (60, 260, 360) verschweißt ist und das von der Außenfläche der Deckelplatte (30) vorstehende Verstärkungselement (60, 360) ferner einen zweiten Abschnitt (62, 362) umfasst, der auf dem ersten Abschnitt (61, 361) ausgebildet ist und von diesem vorsteht und eine zweite Wanddicke (t22) aufweist, die anders ist als die erste Wanddicke (t21).

2. Wiederaufladbare Batterie (1) nach Anspruch 1, wobei das Verstärkungselement (60, 260, 360) die Lüftungsöffnung (35) umgibt und/oder einen Innendurchmesser aufweist, der dem Durchmesser der Lüftungsöffnung (35) entspricht.

3. Wiederaufladbare Batterie (1) nach Anspruch 1 oder 2, wobei das Verstärkungselement (60, 260, 360) um die Lüftungsöffnung (35) herum von der Oberfläche der Deckelplatte (30) vorsteht.

4. Wiederaufladbare Batterie (1) nach einem der Ansprüche 1 bis 3, wobei
die Innenfläche des Verstärkungselements (60) ein gestuftes Profil aufweist, so dass der Innenumfang des Verstärkungselements (60) in Richtung der Deckelplatte (30) abnimmt, wobei die Verschlussplatte (34) auf einer Oberfläche einer inneren Stufe des Verstärkungselements (60) getragen wird oder
auf einer oberen Oberfläche des Verstärkungselements (60) getragen wird.

5. Wiederaufladbare Batterie (1) nach einem der Ansprüche 1 bis 3, wobei das Verstärkungselement (260) von der Deckelplatte (30) vorsteht und die Lüftungsöffnung (35) mit einer gleich bleibenden Wanddicke (t2) umgibt, wobei die Verschlussplatte (34) auf einer oberen Oberfläche des Verstärkungselements (260) getragen wird und an dieser befestigt ist.

6. Wiederaufladbare Batterie (1) nach einem der Ansprüche 1 bis 3, wobei die Außenfläche des Verstärkungselements (360) ein gestuftes Profil aufweist, so dass der Außenumfang des Verstärkungselements (360) in Richtung der Deckelplatte (30) zunimmt, wobei die Verschlussplatte (334) auf einer oberen Oberfläche des Verstärkungselements (360) getragen wird und an dieser befestigt ist.

7. Wiederaufladbare Batterie (1) nach Anspruch 6, wobei die Verschlussplatte (334) Vorsprünge (335) umfasst.

8. Wiederaufladbare Batterie (1) nach Anspruch 7, wobei die Verschlussplatte (334) einen Durchmesser aufweist, der größer ist als der Außendurchmesser des Oberteils des Verstärkungselements (360) und die Vorsprünge (335) auf einem Außenumfang der Verschlussplatte (334) ausgebildet sind, wobei sie in Richtung der Deckelplatte (30) vorstehen und an der Außenfläche des Verstärkungselements (360) befestigt sind.

9. Wiederaufladbare Batterie (1) nach Anspruch 1, wobei die erste Wanddicke (t21) größer ist als die zweite Wanddicke (t22) und der zweite Abschnitt (62) mit der Außenfläche des ersten Abschnitts (61) ausgerichtet ist und die Verschlussplatte (34) auf dem ersten Abschnitt (61) oder dem zweiten Abschnitt (62) getragen wird.

10. Wiederaufladbare Batterie (1) nach Anspruch 1, wobei die erste Wanddicke (t21) größer ist als die zweite Wanddicke (t22), der zweite Abschnitt (362) mit der Innenfläche des ersten Abschnitts (361) ausgerichtet ist und die Verschlussplatte (334) auf dem zweiten Abschnitt (362) getragen wird.

11. Wiederaufladbare Batterie (1) nach einem der Ansprüche 1 oder 9 bis 10, wobei die erste Wanddicke (t21, t2) des Verstärkungselements (60, 360) größer ist als die Dicke (t1) der Deckelplatte (30).

12. Wiederaufladbare Batterie (1) nach einem der vorangehenden Ansprüche, wobei die Verschlussplatte (34) so angepasst ist, dass sie die Lüftungsöffnung (35) in einem geschlossenen Zustand hält, wenn ein Innendruck in der Batterie (1) ein vorab festgelegtes Niveau unterschreitet, und so angepasst ist, dass sie die Lüftungsöffnung (35) öffnet, wenn der Innendruck in der Batterie (1) das vorab festgelegte Niveau übersteigt.

13. Wiederaufladbare Batterie (1) nach einem der vorangehenden Ansprüche, wobei die Verschlussplatte (34):
eine geringere Dicke als die Deckelplatte (30) aufweist; und/oder
eine Kerbe (341) einschließt.

## Revendications

1. Batterie rechargeable (1) comprenant :
un assemblage d'électrodes (10) comportant une première électrode (11), une seconde électrode (12), et un séparateur (13) interposé entre les première et seconde électrodes (11, 12) ; et
un boîtier (20) pour le montage de l'assemblage d'électrodes (10) dans celui-ci ;
une plaque de couvercle (30) pour obturer un orifice du boîtier (20) ;
un trou d'évent (35) formé dans la plaque de couvercle (30) ;
une plaque d'évent (34) obturant le trou d'évent (35) ; et
un élément de renforcement (60, 260, 360) est formé sur la plaque de couvercle (30) en faisant saillie hors de la surface extérieure de la plaque de couvercle (30) et comprenant une première portion (61, 260, 361) ayant une première épaisseur de paroi (t21, t2),
**caractérisée en ce que** :
la plaque d'évent (34) est soudée à l'élément de renforcement (60, 260, 360), et
l'élément de renforcement (60, 360) faisant saillie hors de la surface extérieure de la plaque de couvercle (30) comprend en outre une seconde portion (62, 363) formée sur la partie supérieure de, et faisant saillie hors de, la première portion (61, 361), ayant une seconde épaisseur de paroi (t22) différente de la première épaisseur de paroi (t21).

2. Batterie rechargeable (1) suivant la revendication 1, dans laquelle l'élément de renforcement (60, 260, 360) entoure le trou d'évent (35) et/ou a un diamètre intérieur égal au diamètre du trou d'évent (35).

3. Batterie rechargeable (1) suivant la revendication 1 ou 2, dans laquelle l'élément de renforcement (60, 260, 360) fait saillie hors de la surface de la plaque de couvercle (30) autour du trou d'évent (35).

4. Batterie rechargeable (1) suivant l'une quelconque des revendications 1 à 3, dans laquelle :
la surface intérieure de l'élément de renforcement (60) a un profil étagé de telle sorte que la circonférence intérieure de l'élément de renforcement (60) diminue vers la plaque de couvercle (30), la plaque d'évent (34) étant portée par une surface d'un palier intérieur de l'élément de renforcement (60), ou
étant portée par une surface supérieure de l'élément de renforcement (60).

5. Batterie rechargeable (1) suivant l'une quelconque des revendications 1 à 3, dans laquelle l'élément de renforcement (260) fait saillie hors de la plaque de couvercle (30) et entoure le trou d'évent (35) avec une épaisseur de paroi constante (t2), ladite plaque d'évent (34) étant portée par et fixée à une surface supérieure de l'élément de renforcement (260).

6. Batterie rechargeable (1) suivant l'une quelconque des revendications 1 à 3, dans laquelle la surface supérieure de l'élément de renforcement (360) a un profil étagé de telle sorte que la circonférence extérieure de l'élément de renforcement (360) augmente vers la plaque de couvercle (30), ladite plaque d'évent (334) étant portée et fixée à une surface supérieure de l'élément de renforcement (360).

7. Batterie rechargeable (1) suivant la revendication 6, dans laquelle la plaque d'évent (334) comprend des protubérances (335).

8. Batterie rechargeable (1) suivant la revendication 7, dans laquelle la plaque d'évent (334) a un diamètre supérieur au diamètre extérieur de la partie supérieure de l'élément de renforcement (360) et les protubérances (335) sont formées sur une circonférence extérieure de la plaque d'évent (334) faisant saillie vers la plaque de couvercle (30) et fixée à la surface extérieure de l'élément de renforcement (360).

9. Batterie rechargeable (1) suivant la revendication 1, dans laquelle la première épaisseur de paroi (t21) est supérieure à la seconde épaisseur de paroi (t22), et la seconde portion (62) est alignée avec la surface extérieure de la première portion (61), et la plaque d'évent (34) est portée par la première portion (61) ou la seconde portion (62).

10. Batterie rechargeable (1) suivant la revendication 1, dans laquelle la première épaisseur de paroi (t21) est supérieure à la seconde épaisseur de paroi (t22), la seconde portion (362) est alignée avec la surface intérieure de la première portion (361), et la plaque d'évent (334) est portée par la seconde portion (362).

11. Batterie rechargeable (1) suivant l'une quelconque des revendications 1 ou 9 et 10, dans laquelle la première épaisseur de paroi (t21, t2) de l'élément de renforcement (60, 360) est supérieure à l'épaisseur (t1) de la plaque de couvercle (30).

12. Batterie rechargeable (1) suivant l'une quelconque des revendications précédentes, dans laquelle la plaque d'évent (34) est conçue pour maintenir le trou d'évent (35) à l'état clos si une pression interne à l'intérieur de la batterie (1) est inférieure à une valeur prédéterminée et est conçue pour ouvrir le trou d'évent (35) si la pression à l'intérieur de la batterie (1) est supérieure à la valeur prédéterminée.

13. Batterie rechargeable (1) suivant l'une quelconque des revendications précédentes, dans laquelle la plaque d'évent (34) :
a une épaisseur inférieure à celle de la plaque de couvercle (30) ; et/ou comprend une entaille (341).
